# EUROPÄISCHE PATENTSCHRIFT

(11) **EP 3 895 262 B1**
(45) Veröffentlichungstag und Bekanntmachung des Hinweises auf die Patenterteilung: **30.04.2025**
(21) Anmeldenummer: 19823887.5
(22) Anmeldetag: 06.12.2019
(51) Int. Cl.: H01S 3/127, H01S 3/115, H01S 3/113, H01S 3/08, H01S 3/094, H01S 3/083, H01S 3/0941, H01S 3/06, H01S 3/117

(54) **GÜTEGESCHALTETER FESTKÖRPERLASER**
Q-SWITCHED SOLID-STATE LASER
LASER SOLIDE DÉCLENCHÉ

(30) Priorität: 14.12.2018 AT 3732018
(43) Veröffentlichungstag der Anmeldung: 20.10.2021
(73) Patentinhaber: Kopf, Daniel, 6832 Röthis (AT)
(72) Erfinder: Kopf, Daniel, 6832 Röthis (AT)
(74) Vertreter: Torggler & Hofmann Patentanwälte - Rankweil
(86) Internationale Anmeldenummer: PCT/AT2019/000033
(87) Internationale Veröffentlichungsnummer: WO 2020/118324

(56) Entgegenhaltungen:
- CN-C- 1 328 831
- MAGNUS ARVIDSSON ET AL: "Combined actively and passively Q-switched microchip laser", SPIE - INTERNATIONAL SOCIETY FOR OPTICAL ENGINEERING. PROCEEDINGS, vol. 3265, 27 May 1998 (1998-05-27), US, pages 106, XP055672820, ISSN: 0277-786X, ISBN: 978-1-5106-3377-3, DOI: 10.1117/12.308663
- WANG X ET AL: "TIMING JITTER REDUCTION AND SINGLE-FREQUENCY OPERATION IN AN ACOUSTO-OPTIC Q-SWITCHED CR,ND:YAG LASER", APPLIED OPTICS, OPTICAL SOCIETY OF AMERICA, WASHINGTON, DC, US, vol. 45, no. 33, 20 November 2006 (2006-11-20), pages 8477 - 8483, XP001501847, ISSN: 0003-6935, DOI: 10.1364/AO.45.008477

## Beschreibung

Die Erfindung bezieht sich auf einen gütegeschalteten Festkörperlaser mit einem Resonator, der sowohl einen passiven Güteschalter als auch einen aktiven Güteschalter aufweist.

Güteschalter ("O-switch") dienen zur Erzeugung von gepulster Laserstrahlung. Im Vergleich zu einer lediglich gepulsten Anregung werden mittels Güteschaltern kürzere Pulse erzeugt. Auch können die Spitzenleistungen höher sein. Güteschalter sind als aktive und passive Güteschalter bekannt. Aktive Güteschalter haben den Nachteil, dass eine entsprechende Steuerelektronik erforderlich ist. Außerdem wird die minimale Resonator-Länge durch die Baugröße dieser Güteschalter begrenzt. Sehr kurze Resonatoren sind beispielsweise erforderlich, wenn ein Betrieb des Lasers mit einem einzigen longitudinalen Mode gewünscht ist. Bei passiven Güteschaltern entfällt das Erfordernis der elektronischen Ansteuerung. Auch können passive Güteschalter so klein ausgebildet sein, dass ein Single-Mode-Betrieb ermöglicht wird. Ein Nachteil bei passiven Güteschaltern für bestimmte Anwendungen besteht aber darin, dass diese einen größeren Jitter aufweisen, d.h. der genaue Zeitpunkt der Auslösung variiert von einem Puls zum nächsten.

Ein passiv gütegeschalteter Festkörperlaser mit einer hohen Pulsenergie geht beispielsweise aus Bhandari R. und Taira T., "Palm-top size megawatt peak power ultraviolet microlaser", Optical Engineering, July 2013/Vol. 52(7), 076102-1 - 076102-6 hervor. Als aktives Lasermaterial wird Nd:YAG verwendet und als passiver Güteschalter wird ein Absorber verwendet, der von einem dotierten Festkörpermaterial in Form von Cr:YAG gebildet wird. Mit einer Länge des Resonators von 10mm wird ein "free spectral range", also ein Abstand zwischen den Wellenlängen von möglichen benachbarten longitudinalen Moden erreicht, der so groß ist, dass nur einer der longitudinalen Moden derart im Verstärkungsmaximum liegt, dass dieser anschwingt. Mit diesem Laser wird eine Pulsenergie von 3mJ bei einer Pulsbreite von 230 ps und einer Wiederholrate von 100 Hz erreicht. Die Wellenlänge des Lasers liegt bei 1064 nm. Die Auslegung des Resonators ist so, dass dieser optisch stabil ("stable resonator") ist. Die Ausbildung des Resonators kann monolitisch sein, wobei beide Endspiegel plan sind und im Betrieb vom aktiven Lasermaterial eine thermische Linse mit sammelnder Wirkung ausgebildet wird.

Passiv gütegeschaltete Festkörperlaser mit "single longitudinal mode"-Betrieb und demgegenüber viel kleineren Pulsenergien im Bereich von einigen 10 nJ sind in Form von sehr kleinen monolithischen Mikrochip-Lasern mit Nd:YVO4 als aktivem Lasermaterial bekannt, vgl. z.B. WO 2016/004446 A1. Die Resonatorlängen können hier kleiner als 150 µm sein und es können Pulslängen von weniger als 100 ps erreicht werden. Auch diese Resonatoren sind stabil mit planen Endspiegeln und der Ausbildung einer thermischen Linse im Betrieb.

Aus Lee H.C. et al., "High energy, sub-nanosecond linearly polarized passively Q-switched MOPA laser system", Optics and Laser Technology 95 (2017) 81-85, geht ein passiv gütegeschalteter Nd:YAG/Cr:YAG-Laser mit stabilem Resonator hervor, dessen Ausgangspulse, welche ca. 2,5 mJ-Pulsenergie und eine Pulsdauer von ca. 550 ps aufweisen, nachverstärkt werden. Das aktive Lasermaterial und der Absorber weisen hier an ihren einander zugewandten Seiten gegensinnig im Brewster-Winkel angeordnete Flächen auf, um eine Polarisationsselektion des Laserstrahls zu bewirken.

Bekannte passiv gütegeschaltete Festkörperlaser mit optisch instabilen Resonatoren weisen wesentlich größere Resonatorlängen mit einer Vielzahl von longitudinalen Moden auf. Es können bei solchen bekannten Lasern hohe Pulsenergien bei einer relativ geringen Kippempfindlichkeit der optischen Elemente des Resonators und einer relativ geringen Empfindlichkeit auf Veränderungen der thermischen Linse erreicht werden. Die Intensitätskurve der abgestrahlten Pulse weist aber aufgrund der Überlagerung der verschiedenen Moden Oszillationen und Spikes auf. Derartige Laser mit einem instabilen Resonator gehen beispielweise aus WO 2014/019003 A1, EP 3 117 494 A1 oder WO 2015/021488 A1 hervor.

Aktive Güteschalter sind in Form von akusto-optischen Modulatoren (AOM) und elektro-optischen Modulatoren (EOM), insbesondere Pockels-Zellen bekannt. In Pockels-Zellen kommt beispielsweise Beta-Barium-Borat (BBO) zum Einsatz. Akustooptische Modulatoren erreichen kurze Schaltzeiten bei kleinen Strahlradien, während solche kurze Schaltzeiten bei elektro-optischen Modulatoren auch bei größeren Strahlradien erreicht werden. Zum Einsatz eines elektro-optischen Modulators ist außerdem ein polarisierendes Element im Resonator erforderlich.

Aus Stafsudd O.M. et al., "CO, Laser with Simultaneous Active and Passiv Q-Switching", APPLIED OPTICS, Vol.10, No. 1 (1971) 141-143 geht ein CO₂ Laser hervor, der zur aktiven Güteschaltung einen langsam rotierenden Spiegel aufweist. Es wird ein Auftreten von Mehrfachpulsen beobachtet, welche durch zusätzliches Einführen eines sättigbar absorbierenden Gases, von welchem ein passiver Güteschalter ausgebildet wird, eliminiert werden können. Bei langsamen Wiederholraten kann hierbei auch eine Verkürzung der Pulsdauer und Erhöhung der Maximal-Intensität erreicht werden.

Aus WANG, Xuejun et al. "Single-longitudinal-mode Operation of a 1 W combined actively and passively Q-switched Cr,Nd:YAG Laser" 5. September 2005 (05.09.2005) OPTICS EXPRESS 6697 Vol. 13, No. 18, pp. 6693-6698 geht ein Festkörperlaser der eingangs genannten Art mit einem aktiven und einem passiven Güteschalter hervor. Die Resonatorlänge wurde hierbei auf einen Wert von 66 mm minimiert, um den "free spectral range", also den Frequenzabstand benachbarter longitudinaler Moden zu maximieren. In Verbindung mit dem Einsatz des passiven Güteschalters, der in bekannter Weise zur Selektion eines definierten longitudinalen Modes dient, kann ein Betrieb mit einem einzigen longitudinalen Mode erreicht werden. Mittels dem aktiven Güteschalter werden die Pulse moduliert, die somit einen relativ geringen Jitter aufweisen. Der passive Güteschalter wird also zur Lösung der Aufgabe des Bereitstellens eines Single-Mode-Betriebs eingesetzt und der aktive Güteschalter zur Lösung der Aufgabe der Erzeugung von Pulsen mit geringem Jitter. Ähnliche Festkörperlaser gehen auch aus der CN 1645691 A und der CN 104158082 A hervor. In der erstgenannten Schrift sind hierbei neben Lasern mit stabilen Resonatoren auch solche mit instabilen Resonatoren erwähnt.

Aus Arvidsson M et al. "Combined actively and passively Q-switched microchip laser", SPIE PROCEEDINGS, Bd. 3265, 27. Mai 1998, Seite 106 ist ein Microchiplaser mit kombinierter aktiver und passiver Güteschaltung bekannt.

Aufgabe der Erfindung ist es, einen verbesserten gütegeschalteten Festkörperlaser der eingangs genannten Art bereitzustellen, der bei einem stabilen Betrieb mit nur einem einzigen longitudunalen Mode sehr kurze Pulse mit einem geringen Jitter aufweist. Erfindungsgemäß gelingt dies durch die Merkmale des Anspruchs 1.

Gemäß der Erfindungbeträgt der vom aktiven Güteschalter im aktivierten Zustand bewirkte Verlust, bezogen auf einen Hin- und einen Rückweg durch den linearen, gefalteten oder ungefalteten, Resonator weniger als 50%, vorzugsweise weniger als 30%. Im Weiteren weist Resonator eine Resonatorlänge von weniger als 50 mm, vorzugsweise weniger als 25mm auf. Erfindungsgemäß wird somit ein Festkörperlaser mit so kurzem Resonator bereitgestellt werden, dass dieser nur einen einzigen longitudinalen Mode aufweist, wobei sehr kurze Pulse erzeugt werden und die Pulse zu genau definierten Zeitpunkten ausgelöst werden.

Ein Grundgedanke der Erfindung ist es, dass der vom aktiven Güteschalter zu bewirkende Verlust durch ein Zusammenwirken mit dem passiven Güteschalter relativ gering gehalten werden kann, womit der aktive Güteschalter mit einer kleinen Baugröße ausgebildet werden kann. Die vom aktiven und passiven Güteschalter zusammen im Resonator eingenommene Baulänge kann hierbei deutlich geringer sein als die Baulänge von herkömmlichen aktiven Güteschaltern, die mit einem hohen Verlust im aktivierten Zustand, beispielsweise von mehr als 99%, ausgebildet sind. Somit kann die Resonatorlänge und in Folge auch die Pulslänge weiter verkürzt werden. Durch den Einsatz des aktiven Güteschalters, auch wenn dieser nur einen relativ geringen Verlust aufweist, zusätzlich zum passiven Güteschalter kann dennoch der Zeitpunkt der Auslösung des Laserpulses genau festgelegt werden, während sich durch den Einsatz allein eines passiven Güteschalters ein wesentlich größerer Jitter ergeben würde.

Der vom passiven Güteschalter maximal bewirkte Verlust (wenn der Absorber vollständig ungesättigt ist) beträgt erfindungsgemäß mehr als 50% und ist damit günstigerweise größer, beispielsweise mehr als doppelt so groß, als der vom aktiven Güteschalter im aktivierten Zustand bewirkte Verlust , der erfindungsgemäß weniger als 50% beträgt. Z.B. kann der vom passiven Güteschalter maximal bewirkte Verlust 90% und der vom aktiven Güteschalter im aktivierten Zustand bewirkte Verlust 10% betragen.

Wenn vom Verlust des aktiven oder passiven Güteschalters die Rede ist, so bezieht sich dieser Verlust bei der Ausbildung als linearer Resonator auf den Hin- und Rückweg zusammengenommen (also auf einen doppelten Durchlauf), während er sich bei der Ausbildung als Ringresonator auf einen Umlauf um den Resonator bezieht (also auf einen einzelnen Durchlauf).

Erfindungsgemäß beträgt die Pulsenergie mehr als 1 mJ, vorzugsweise mehr als 10 mJ. Erfindungsgemäß ist der Resonator als instabiler Resonator ausgebildet, wobei der Resonator einen in Form eines Gradientenspiegel ausgebildeten Spiegel aufweist.

Die Pulsdauer beträgt erfindungsgemäß weniger als 500 ps.

Weitere Vorteile und Einzelheiten der Erfindung werden im Folgenden anhand der beiliegenden Zeichnung erläutert. In dieser zeigen:
Fig. 1 ein erstes Ausführungsbeispiel der Erfindung;
Fig. 2a) - e) und Fig. 3 a) - c) Diagramme zur Erläuterung des Betriebs des Lasers;
Fig. 4 ein zweites Ausführungsbeispiel der Erfindung;
Fig. 5 ein drittes Ausführungsbeispiel der Erfindung;
Fig. 6 ein viertes,nicht unter die vorliegende Erfindung fallendes, Alternativbeispiel;
Fig. 7 ein fünftes,nicht unter die vorliegende Erfindung fallendes, Alternativbeispiel.

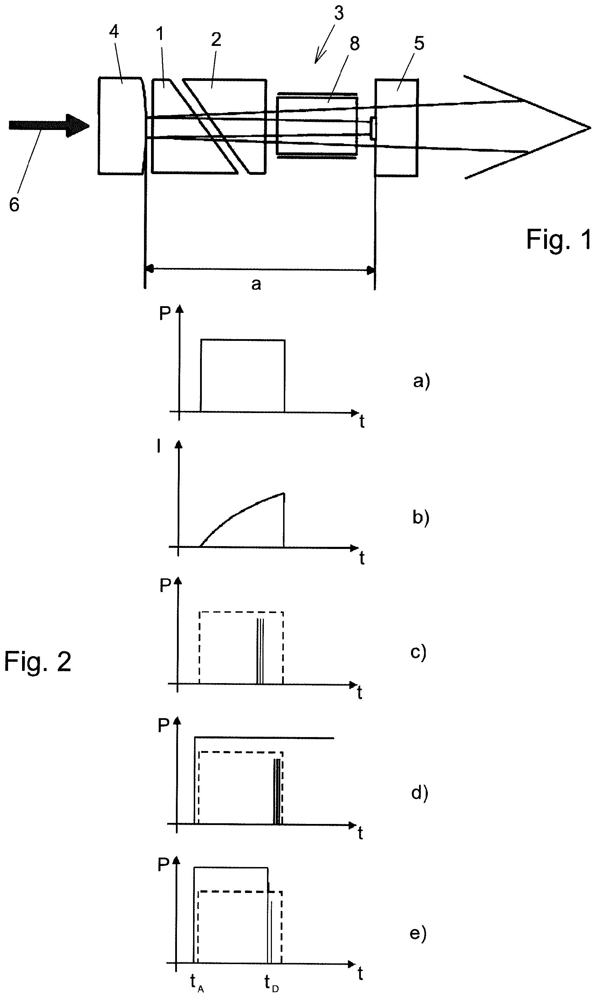

Ein erstes Ausführungsbeispiel der Erfindung ist schematisch in Fig. 1 dargestellt. Es handelt sich um einen Festkörperlaser mit einem aktiven Lasermaterial 1, welches beispielsweise von Nd:YAG gebildet wird. Die Dotierung kann beispielsweise bei 1,1% liegen.

Das aktive Lasermaterial 1 ist zwischen einem ersten und einem zweiten Spiegel 4, 5 angeordnet, welche die Endspiegel des Resonators 3 bilden. Zwischen den Spiegeln 4, 5 sind im Weiteren ein passiver Güteschalter 2 und ein aktiver Güteschalter 8 angeordnet.

Der Resonator 3 umfasst im Ausführungsbeispiel also die Spiegel 4, 5, das aktive Lasermaterial 1, den passiven Güteschalter 2 und den aktiven Güteschalter 8.

Der passive Güteschalter 2 wird von einem sättigbaren Absorber gebildet, der insbesondere als ein dotiertes Festkörpermaterial ausgebildet ist, im Ausführungsbeispiel Cr:YAG (genauer Cr⁴⁺:YAG).

Der aktive Güteschalter 8 wird im Ausführungsbeispiel von einem elektro-optischen Modulator gebildet, insbesondere einer Pockels-Zelle, die z.B. Beta-Barium-Borat aufweist.

Im Ausführungsbeispiel dient der erste Spiegel 4 auch zur Einkopplung der in Fig. 1 nur schematisch durch einen Pfeil angedeuteten Pumpstrahlung 6, sodass das aktive Lasermaterial 1 longitudinal gepumpt ist (=Pumpstrahlung propagiert auf der gleichen Achse wie die Laserstrahlung). Dazu ist der erste Spiegel 4 dichroitisch beschichtet, wobei er für die Pumpstrahlung 6 zumindest weitgehend durchlässig (T > 95%), während er für die Wellenlänge des Laserstrahls möglichst stark reflektierend (R > 99,9%) und dementsprechend wenig durchlässig ist. Beispielsweise beträgt die Wellenlänge der Pumpstrahlung 808 nm.

Die Wellenlänge des Laserlichts beträgt im Ausführungsbeispiel 1064 nm.

Die Einrichtung zum Pumpen selbst ist in Fig. 1 nicht dargestellt. Es kann sich um eine herkömmliche fasergekoppelte Laserdiode mit QCW("quasi continous wave")-Leistung von beispielsweise bis zu 150 W (für 250 µs Pulsdauer) handeln, die mit einer Pulswiederholrate im Bereich von 0-100 Hz betrieben wird. Der Strahldurchmesser der Pumpstrahlung kann z.B. ca. 2,5 mm betragen.

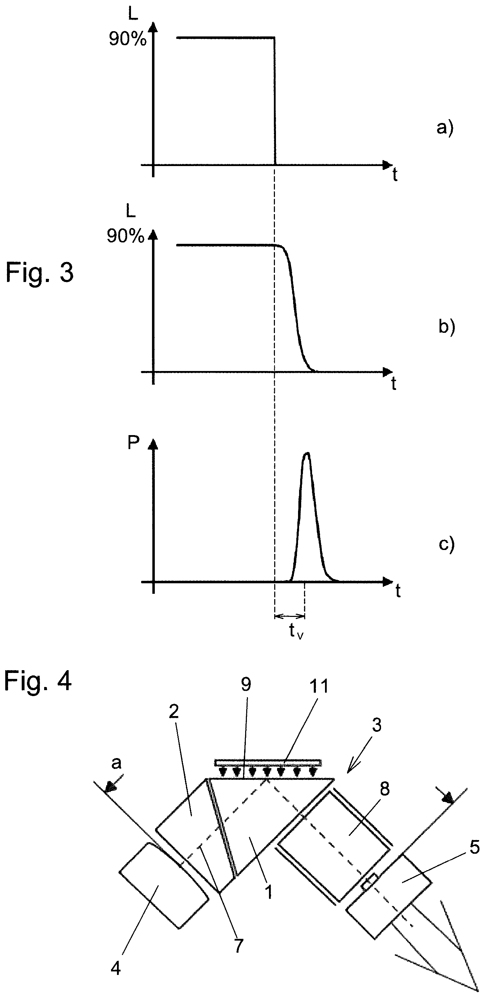

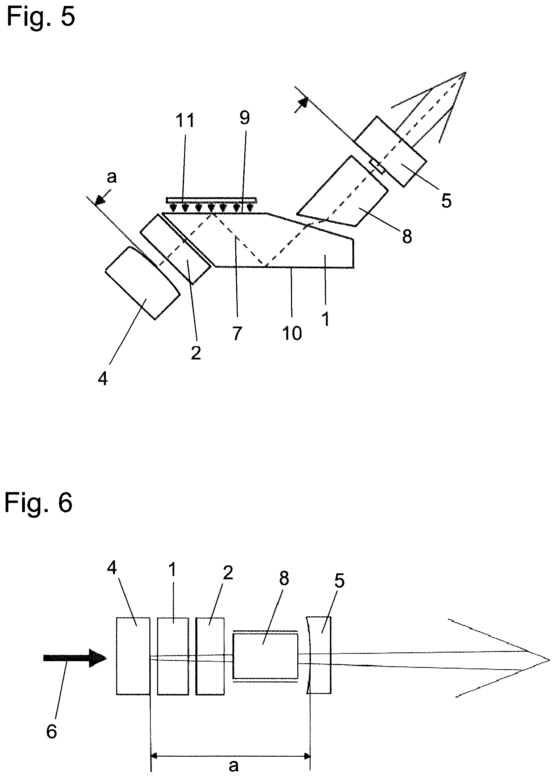

Beim Resonator 3 handelt es sich um einen linearen Resonator oder stehende Wellenresonator. Der Begriff "linearer Resonator" umfasst auch solche, bei denen der Strahlenverlauf im Resonator durch mindestens eine Reflektion innerhalb der Kavität des Resonators geknickt ist, also auch gefaltete Resonatoren. Ein anderes Funktionsprinzip stellt dagegen der Ringresonator dar, in welchem ein Umlauf der Strahlung erfolgt. Die Baulänge des Resonators von Spiegel 4 zu Spiegel 5 entspricht in diesem Ausführungsbeispiel der entlang der Achse 7 des Laserstrahls im Resonator gemessenen Länge (= Resonatorlänge a) von einem Spiegel 4 zum anderen Spiegel 5. Diese Resonatorlänge a beträgt weniger als 50 mm, vorzugsweise weniger als 25 mm. Würde der Laserstrahl im Resonator reflektiert (wie z.B. in den Ausführungsbeispielen gemäß den Fig. 4 und 5), so müsste als Resonatorlänge a die "entfaltete" Länge des Resonators herangezogen werden, also wiederum die entlang der Achse des Laserstrahls gemessene Länge des Resonators von einem Spiegel zum anderen Spiegel.

Der erste Spiegel 4 ist als optisches Element mit negativer Brechkraft ausgebildet. Die Fokuslänge besitzt somit einen negativen Wert, wobei der Betrag der Fokuslänge kleiner als 500 mm, vorzugsweise kleiner als 250 mm, besonders bevorzugt kleiner als 150 mm ist. Ein auf den ersten Spiegel 4 auftreffender Strahl wird also mit einer hohen Divergenz reflektiert.

Beim zweiten Spiegel 5, durch welchen die Auskoppelung der Laserstrahlung erfolgt, handelt es sich um einen Gradientenspiegel ("gradient reflectivity mirror"; auch als "variable reflectivity mirror" bezeichnet). Derartige Gradientenspiegel sind bekannt. Die zentrale Reflektivität des Gradientenspiegels kann günstigerweise im Bereich von 30% bis 60%, z.B. bei 40%, liegen. Der Radius, bei welchem die Reflektivität des Gradientenspiegels auf e-2 abgefallen ist, kann günstigerweise im Bereich von 0,5 mm bis 2 mm liegen, z.B. bei 0,75 mm.

Die Reflektivitätskurve des Gradientenspiegels (=Reflektivität als Funktion des Radius) kann insbesondere die Form einer Gaußkurve oder einer Super-Gaußkurve aufweisen.

Der Resonator 3 ist somit optisch instabil. Die Magnifikation des Resonators ist hierbei >1.2, im Ausführungsbeispiel beträgt sie ca. 2. Die Magnifikation ist ein Maß für die geometrische Spreizung der umlaufenden Strahlen im instabilen Resonator, d.h. bei M=2 sind die geometrischen Strahlen des Eigenmodes des instabilen Resonators bei einem Umlauf um den Faktor 2 weiter von der Achse entfernt.

Die insgesamte Brechkraft des Resonators (= die addierten Brechkräfte der optischen Elemente für einen Hin- und Rückweg durch den Resonator 3 zusammengenommen, wobei jeder der Spiegel 4, 5 nur einmal eingeht) entspricht in diesem Ausführungsbeispiel im Wesentlichen der Brechkraft des ersten Spiegels 4, da die Brechkraft der im Betrieb vom aktiven Lasermaterial 1 gebildeten thermischen Linse demgegenüber wesentlich geringer ist. Die insgesamte Brechkraft des Resonators ist somit negativ, wobei ihr Betrag größer als 2 dpt, vorzugsweise größer als 4 dpt ist. Beispielsweise kann die insgesamte Brechkraft im Bereich von -5 dpt bis -15 dpt liegen.

Der Resonator 3 ist von seiner Länge a her so abgestimmt, dass ein longitudinaler Mode der Laserstrahlung gerade beim Verstärkungsmaximum des aktiven Lasermaterials 1, im Ausführungsbeispiel bei 1064 nm liegt. Hierzu ist der Laser zweckmäßigerweise auch temperaturstabilisiert. Durch die Kürze des Resonators 3 ist der "free spectral range" so groß, dass die benachbarten longitudinalen Moden so weit außerhalb des Verstärkungsmaximums liegen, dass diese zumindest im Wesentlichen nicht anschwingen (d.h. ihre Energie beträgt weniger als 10% derjenigen des Grundmodes), insbesondere gar nicht anschwingen (d.h. die Laserschwelle wird nicht überschritten). Auch die Breite des Verstärkungsmaximums des aktiven Lasermaterials ist hierzu entsprechend klein. Der Laser weist im Betrieb also zumindest im Wesentlichen nur einen einzelnen longitudinalen Mode auf. Auch weist der Laser im Betrieb zumindest im Wesentlichen nur einen einzigen transversalen Mode auf. Die Ausbildung als instabiler Resonator begünstigt hierbei, dass transversale Moden höherer Ordnung zumindest im Wesentlichen nicht anschwingen. Der Laser ist also sowohl bezüglich transversaler als auch bezüglich longitudinaler Moden ein "single mode"-Laser.

Durch die Ausbildung mit einer negativen Brechkraft, die einen hohen Betrag aufweist, kann hierbei trotz der Kürze des Lasers eine große Modengröße erreicht werden. Günstigerweise ist der Strahlradius des Laserstrahls im aktiven Lasermaterial 1 größer als 500 µm. Es kann dadurch eine hohe Pulsenergie erreicht werden, ohne dass es zu einer optischen Zerstörung kommt. Die Pulsenergie beträgt vorzugsweise mehr als 10 mJ.

Die Verwendung von Cr:YAG als sättigbarer Absorber kann eine stabilisierende Wirkung haben. Der Absorber sättigt zunächst an den Stellen der Schwingungsbäuche des Hauptmodes (="Lochbrennen"). Dadurch wird für Nebenmoden eine höhere Absorption verursacht, weil diese vermehrt in einem nicht gesättigten Bereich ihre Schwingungsknoten haben.

Die Ein- und Austrittsflächen des aktiven Lasermaterials 1 und Absorbers 2 sind vorteilhafterweise für die Wellenlänge des Laserstrahls antireflektionsbeschichtet.

In diesem Ausführungsbeispiel sind das aktive Lasermaterial 1 und der passive Güteschalter 2 jeweils in einer sogenannten "flat-brewster"-Konfiguration geschnitten und poliert. Das aktive Lasermaterial 1 und der passive Güteschalter 2 weisen also an ihren zueinander gerichteten Seiten jeweils einen Brewster-Winkel auf, wobei diese Seiten zumindest im Wesentlichen parallel zueinander liegen, und die gegenüberliegende Seiten stehen rechtwinkelig zur Achse 7 des Laserstrahls. Die Flat-Seite ist günstigerweise wiederum mit einer Antireflektionsbeschichtung für die Laserwellenlänge beschichtet (gegebenenfalls auch für die Wellenlänge der Pumpstrahlung). Die Brewster-Flächen sind nicht notwendigerweise beschichtet. Die beiden Brewster-Flächen lassen die p-Polarisation ungehindert durch, ergeben aber einen Verlust für die s-Polarisation, sodass diese zumindest im Wesentlichen nicht anschwingt (d.h. die Energie beträgt weniger als 10% von derjenigen der p-Polarisation), insbesondere gar nicht anschwingt (d.h. die Laserschwelle wird nicht überschritten). Damit wird erzwungen, dass der Laser zumindest im Wesentlichen in der p-Polarisation läuft.

Um einen Etalon-Effekt für die s-Polarisation zu vermeiden, der die Verluste für die s-Polarisation verringern oder ausschalten könnte, muss der Abstand zwischen den beiden Brewster-Flächen genau gewählt werden, sodass sich keine hohe Transmission der s-Polarisation für die Wellenlängen jener s-polarisierten Moden vorliegt, die dem Verstärkungsmaximum des aktiven Lasermaterials 1 nahe sind. Stattdessen oder zusätzlich kann auch eine gegenseitige leichte Verkippung der Brewster-Flächen vorgesehen sein.

Das aktive Lasermaterial 1 und der passive Güteschalter 2 können monolitisch ausgebildet sein, wobei dann zwischen den Brewster-Flächen eine dielektrische Beschichtung vorzusehen ist (ähnlich den bekannten "polarizing cubes").

Beispielsweise kann die Transmission des den passiven Güteschalter 2 ausbildenden Absorbers im ungesättigten Zustand bei ca. 30% liegen. Über den Hin- und Rückweg durch den Resonator ergibt sich somit eine Transmission von ca. 10%, sodass der vom Absorber im ungesättigten Zustand bewirkte Verlust etwa bei 90% liegt.

Wie bereits zuvor beschrieben haben die Brewster-Flächen des passiven Güteschalters 2 und des aktiven Lasermaterials 1 eine zumindest so stark polarisierende Wirkung, dass zumindest im Wesentlichen nur eine der Polarisationen im Resonator anschwingen kann, im Ausführungsbeispiel die p-Polarisation. Wird der aktive Güteschalter 8 durch Anlegung einer Hochspannung aktiviert, so wird die Polarisation der Laserstrahlung bei ihrem Durchtritt durch den aktiven Güteschalter so stark verändert, dass es im Zusammenhang mit den Brewster-Flächen zu einem Verlust auch bezüglich der Polarisationsrichtung, welche ungehindert durch die Brewster-Flächen durchtreten kann (im Ausführungsbeispiel die p-Polarisation), kommt. Dieser im aktivierten Zustand des aktiven Güteschalters 8 eingeführte Verlust (bezogen auf den Hin- und Rückweg zusammengenommen) kann beispielsweise im Bereich von 10% liegen.

Der im Ausführungsbeispiel von einer BBO-Pockels-Zelle gebildete aktive Güteschalter 8 kann z.B. 3mm bis 7 mm lang sein, einen Querschnitt von 3 x 3 mm aufweisen. Die Oberflächen können vergoldet sein, um die Hochspannung flächig anzubringen. Die Schaltspannung kann beispielsweise im Bereich von 1000 V bis 3000 V liegen.

Da der aktive Güteschalter 8 nur eine relativ geringfügige Änderung der Polarisation bewirken muss, um den gewünschten, relativ kleinen Verlust von z.B. 10% zu bewirken wird eine kleine Baugröße des aktiven Güteschalters 8 ermöglicht.

Die Funktionsweise des Lasers wird im Folgenden anhand der Diagramme von Fig. 2 und 3 erläutert.

Fig. 2 a) zeigt einen Puls der anliegenden Pumpleistung (die Leistung P ist gegen die Zeit t aufgetragen). Beispielsweise liegt die Pumpleistung für 250 µs an (da die Speicherzeit bei Nd:YAG bei rund 240 µs liegt).

In Fig. 2 ist nur ein Puls der Pumpleistung dargestellt. Solche Pulse werden mit der gewünschten Frequenz der Laserpulse periodisch wiederholt, z.B. mit einer Frequenz im Bereich von 10 bis 100 Hz.

Fig. 2 b) zeigt den Aufbau der Inversion (I). Dieser folgt einer Aufladungskurve, da die Inversion laufend durch spontane Emission abgebaut wird. Entsprechend steigt die Verstärkung ("gain") an.

In Fig. 2 c) ist die Laserleistung dargestellt (Darstellung der Leistung P gegen die Zeit t), wie sie sich ohne aktiven Güteschalter ergeben würde. Es sind hierbei die Laserpulse von drei Pumpzyklen eingezeichnet. Aufgrund von Rauschen in der Pumpleistung, Vibrationen, Pumpwellenlängen-Ungenauigkeiten von Puls zu Puls, Instabilitäten im Laserdiodenstrom, usw., werden diese Laserpulse nicht zum genau gleichen Zeitpunkt innerhalb des Pumppulses (dessen Zeitfenster in Fig. 2 c) schematisch durch eine gestrichelte Linie dargestellt ist) ausgelöst. Vielmehr entsteht typisch ein Jitter im Bereich von z.B. 1-2 µs von Puls zu Puls.

Fig. 2 d) zeigt die Situation, wie sie sich mit aktivem Güteschalter ergeben würde, der über die gesamte Dauer des Pumppulses und darüber hinaus aktiviert bleibt. D.h. die Hochspannung wird vor Beginn des Pumppulses an den elektro-optischen Modulator angelegt und bis über das Ende des Pumppulses hinaus beibehalten. Aus Fig. 2 d) ist ersichtlich, dass aufgrund des durch den aktiven Güteschalter in dessen aktiviertem Zustand zusätzlich eingeführten Verlustes die Auslösung des Laserpulses in Richtung zum Ende des Pumppulses verschoben wird, wobei der Jitter nach wie vor auftritt. Je nach Auslegung könnte die Auslösung des Laserpulses in diesem Fall auch vollständig unterdrückt sein.

Fig. 2 e) zeigt nun den erfindungsgemäßen Betrieb. Der aktive Güteschalter wird zum Aktivierungszeitpunkt t_{A} aktiviert. Der Aktivierungszeitpunkt t_{A} liegt im Ausführungsbeispiel vor Beginn des Pumppulses. Die Aktivierung des aktiven Güteschalters könnte auch erst nach Beginn des Pumppulses erfolgen. Der Aktivierungszeitpunkt t_{A} liegt aber jedenfalls vor dem frühesten Zeitpunkt des Auftretens eines Laserpulses ohne Aktivierung des aktiven Güteschalters. Der aktive Güteschalter bleibt über den Zeitpunkt hinaus aktiviert, zu welchem der Laserpuls ohne Aktivierung des aktiven Güteschalters unter Berücksichtigung des Jitters spätestens ausgelöst würde. In der Folge, aber vor Ende des Pumppulses erfolgt die Deaktivierung des aktiven Güteschalters (zum Deaktivierungszeitpunkt t_{D}). Damit wird der Laserpuls ausgelöst. Die Deaktivierung erfolgt natürlich vor dem Zeitpunkt, zu welchem ein Laserpuls frühestens im aktivierten Zustand des aktiven Güteschalters ausgelöst würde.

Die kurze Zeitspanne zwischen der Deaktivierung des aktiven Güteschalters und der Auslösung des Laserpulses variiert von Puls zu Puls nur minimal. Der Zeitpunkt der Auslösung des Laserpulses ist damit genau definiert. Der verbleibende Jitter liegt jedenfalls mehr als eine Größenordnung unter dem Jitter, der bei alleinigem Einsatz eines passiven Güteschalters auftreten würde.

Die Aktivierung des aktiven Güteschalters erfolgt im Ausführungsbeispiel durch Anlegen einer Hochspannung und die Deaktivierung durch Abschalten der Hochspannung.

Fig. 3 a) zeigt den Verlust ("loss"), aufgrund des aktiven Güteschalters. Dieser beträgt im aktivierten Zustand des aktiven Güteschalters im Ausführungsbeispiel 10%. Wenn der aktive Güteschalter deaktiviert wird sinkt der durch den aktiven Güteschalter bewirkte Verlust auf vorzugsweise unter 1% ab (in Fig. 3 a) wurde der verbleibende Verlust vernachlässigt).

Fig. 3 b) zeigt den durch den passiven Güteschalter bewirkten Verlust. Maximal, also im vollständig ungesättigten Zustand des Absorbers, liegt dieser im Ausführungsbeispiel bei ca. 90%. Wenn der Absorber gesättigt ist, sinkt der durch den passiven Güteschalter bewirkte Verlust auf vorzugsweise unter 1% ab (in Fig. 3b) wurde der verbleibende Verlust vernachlässigt).

Fig. 3 c) zeigt das Einsetzen des Laserpulses in Relation zum zeitlichen Verlauf der durch den aktiven und passiven Güteschalter bewirkten Verluste. Zwischen der Deaktivierung des aktiven Güteschalters und dem Intensitätsmaximum des Laserpulses liegt eine Verzögerungszeit tᵥ, welche wie gesagt von Puls zu Puls weitgehend konstant ist.

Aus Fig. 3 ist auch ersichtlich, dass unmittelbar vor Deaktivierung des aktiven Güteschalters der durch den passiven Güteschalter bewirkte Verlust immer noch größer als der durch den aktiven Güteschalter bewirkte Verlust ist.

Vorteilhafterweise kann die Pulsenergie größer als 1 mJ sein. Die Pulsdauer kann weniger als 500 ps betragen.

Die Brewster-Flächen des aktiven Lasermaterials 1 und passiven Gütschalters 2 könnten auch entfallen und stattdessen könnte ein anderes polarisierendes Element im Resonator angeordnet sein.

Ein zweites Ausführungsbeispiel der Erfindung ist in Fig. 4 dargestellt. Abgesehen von den im Folgenden beschriebenen Unterschieden entspricht die Ausbildung des Lasers und der Betrieb des Lasers dem ersten Ausführungsbeispiel und die Beschreibung des ersten Ausführungsbeispiels kann insoweit in analoger Weise herangezogen werden.

Die im Zusammenhang mit dem ersten und zweiten Ausführungsbeispiel eingesetzten fasergekoppelten Laserdiodenmodule als Pumpquellen haben eine limitierte Leistung und sind verhältnismäßig teuer für die verfügbare Leistung. Um die Leistung bei geringeren Kosten und geringerer Komplexität zu erhöhen, werden in diesem Ausführungsbeispiel QCW-Laserdioden-Stacks als Quelle der Pumpstrahlung verwendet. Es sind Ausbildungen bekannt, bei denen mehrere z.B. 1 cm breite, Laserdioden-Barren zu einem Laserdiodenmodul mit hoher Leistung zusammengefasst sind, das in QCW ("quasi continous wave") betrieben wird. Es ist dabei auch bekannt, die Barren direkt aufeinander zu bonden, sodass ein geringer Abstand zwischen den Barren besteht, z.B. 140 µm. Ein Stack mit 10 Barren kann somit auf einer Fläche von 10 mm x 1,4 mm emittieren, wobei der Abstrahlwinkel in der x-Richtung ca. +/- 5° beträgt und jener in der y-Richtung ca. +/- 25°, sofern keinerlei Optik verwendet wird.

Ein wesentlicher Unterschied zu den zuvor beschriebenen Ausführungsbeispielen besteht darin, dass in diesem Ausführungsbeispiel das aktive Lasermaterial seitengepumpt ist (also durch eine Fläche, die winkelig zur Achse des Laserstrahls steht). Hierzu kann ein zuvor beschriebener Stack 11, der in Fig. 4 schematisch angedeutet ist, eingesetzt werden, mit dem die Pumpstrahlung 6 direkt in das aktive Lasermaterial 1 eingestrahlt wird.

Der Laserstrahl im aktiven Lasermaterial 1 wird hierbei an dieser Seitenfläche 9, durch welche die Einstrahlung der Pumpstrahlung 6 erfolgt, durch interne Totalreflektion reflektiert.

Besonders bevorzugt ist ein Einfallswinkel des Laserstrahls von 45°, sodass die Achse 7 des Laserstrahls um 90° abgewinkelt wird. Bei einem solchen Einfallswinkel und p-Polarisation ergibt sich der Effekt, dass der einfallende und ausfallende Strahl nicht miteinander interferieren, da ihre E-Feld-Vektoren rechtwinkelig zueinander stehen. Dadurch erzeugen der einfallende und ausfallende Strahl für sich betrachtet keinerlei räumliches Lochbrennen im angeregten aktiven Lasermaterial 1, was die Modenstabilität und die Effizienz erhöht. Andernfalls könnte sogenanntes SHB ("spacial hole burning") den gain der Nebenmoden deutlich erhöhen.

Um die erwünschte p-Polarisation zu erzwingen, können das aktive Lasermaterial 1 und der passive Güteschalter 2 wie dargestellt jeweils eine Brewster-Fläche aufweisen, analog wie im zuvor beschriebenen Ausführungsbeispiel.

Die entlang der Achse 7 des Laserstrahls gemessene Länge (=Resonatorlänge a) des Resonators 3 vom ersten Spiegel 4 zum zweiten Spiegel 5 (=entfaltete Länge des Resonators) kann in diesem Ausführungsbeispiel beispielsweise 20 mm betragen. Diese Resonatorlänge a ist in Fig. 3 durch winkelig zueinander stehende Dimensionierungslinien und -pfeile angedeutet.

Ein zuvor beschriebener Laserdioden-Stack kann z.B. 2000 W Leistung für 250 µs abstrahlen, was einer Pumpenergie von 500 mJ entspricht. Es kann damit eine Energie des Laserpulses im Bereich von 100 mJ erreicht werden.

Um eine ausreichender Aufweitung der Pumpstrahlung in y-Richtung zu erzielen, kann die Luftstrecke zwischen dem Laserdioden-Stack und der Eintrittsfläche in das aktive Lasermaterial 1 beispielsweise im Bereich von 2-3 mm liegen.

Die insgesamte negative Brechkraft des Resonators 3 wird so ausgelegt, dass sich ein ausreichend großer Modenradius der Laserstrahlung ergibt. Beispielsweise liegt die Fokuslänge des ersten Spiegels 4 im Bereich von -50 mm. Es ergibt sich damit eine Magnifikation von ca. 2. Der Modenradius der Laserstrahlung kann beim Auftreffen auf den zweiten Spiegel 5 im Bereich von 3,5 mm liegen. Der Gradientenspiegel wird entsprechend ausgelegt. Der Radius, bei welchem die Reflektivität des Gradientenspiegels auf e⁻² abgefallen ist, kann hierbei im Bereich von 1,75 mm liegen.

Die Polarisationsselektion kann zusätzlich durch eine Phasenverschiebung zwischen der s- und p-Polarisation bei der totalen internen Reflektion an der Oberfläche des aktiven Lasermaterials 1 unterstützt werden. Die entfaltete Länge des Resonators 3 kann hierbei durch Feinjustage so eingestellt werden, dass nur für eine der beiden Polarisationen ein longitudinaler Mode im Verstärkungsmaximum des aktiven Lasermaterials 1 liegt, während die longitudinalen Moden für die andere Polarisation demgegenüber soweit verschoben sind, dass diese zumindest im Wesentlichen nicht anschwingen (d.h. die Energie beträgt weniger als 10%, vorzugsweise weniger als 1%, von derjenigen des Grundmodes mit der Polarisation, die eine Lage im Verstärkungsmaximum ergibt), insbesondere gar nicht anschwingen (d.h. die Laserschwelle wird nicht überschritten). Eine solche Feinjustage der Resonatorlänge kann beispielsweise durch Einstellung der Temperatur der Basisplatte, auf welcher der Laser montiert ist, erfolgen.

Der durch die totale innere Reflektion bewirkte Phasenunterschied zwischen der s- und p-Polarisation beträgt bei einem Einfallswinkel von 45° etwa 116°. Denkbar wäre auch eine Beschichtung dieser Seitenfläche 8, um einen gezielten Phasenunterschied hervorzurufen, beispielsweise von 90°. Diese Beschichtung müsste für die Wellenlänge der Pumpstrahlung durchlässig sein.

Die Brewster-Flächen des aktiven Lasermaterials 1 und des passiven Güteschalters 2 könnten auch entfallen und die Polarisationsselektion könnte ausschließlich aufgrund des durch die totale innere Reflektion bewirkten Phasenunterschieds zwischen der s- und der p-Polarisation der Laserstrahlung erfolgen. Auch ein weiteres oder ein anderes polarisierendes Element könnte vorgesehen sein.

Fig. 5 zeigt ein drittes Ausführungsbeispiel der Erfindung. Die Ausbildung entspricht derjenigen des zweiten Ausführungsbeispiels, abgesehen von den im Folgenden beschriebenen Unterschieden. Im Übrigen kann die Beschreibung des zweiten Ausführungsbeispiels in analoger Weise herangezogen werden.

In diesem Ausführungsbeispiel weist das aktive Lasermaterial 1 eine andere Form als im zweiten Ausführungsbeispiel auf, und zwar ist es derart länger ausgebildet, dass es zu zwei totalen internen Reflektionen kommt. Wenn der Laserstrahl ausgehend vom ersten Spiegel 4 in das aktive Lasermaterial 1 eintritt (nach Durchtritt durch den passiven Güteschalter 2) erfolgt zunächst eine Totalreflektion an der Seitenfläche 9, durch welche die Pumpstrahlung eingestrahlt wird. Im Weiteren erfolgt eine Totalreflektion an der gegenüberliegenden Seitenfläche 10. In der Folge tritt der Laserstrahl eine vorzugsweise im Brewster-Winkel stehende Endfläche des aktiven Lasermaterials 1 aus und gelangt von dort durch den aktiven Güteschalter 8 zum zweiten Spiegel 5. Die Abwinklungen der Achse 7 des Laserstrahls bei den beiden totalen internen Reflektionen betragen vorzugsweise jeweils 90°. Andere Winkel sind aber grundsätzlich ebenfalls denkbar und möglich.

Die gegenüberliegenden Brewster-Flächen des passiven Güteschalters 2 und des aktiven Lasermaterials 1 wurden hier weggelassen. Stattdessen sind gegenüberliegende Brewster-Flächen zwischen dem aktiven Lasermaterial 1 und dem aktiven Güteschalter 8 vorgesehen. Stattdessen oder zusätzlich könnten auch gegenüberliegende Brewster-Flächen zwischen dem passiven Güteschalter 2 und dem aktiven Lasermaterial 1 vorgesehen sein.

Das in dieser Weise ausgebildete aktive Lasermaterial kann in einfacher Weise auf einer Grundplatte montiert werden. Es können auch Vorteile dieser Ausbildung in Hinblick auf ein "parasitäres Lasern" bestehen. Ein gewisser Nachteil besteht in der größeren Länge des aktiven Lasermaterials 1.

Wenn die insgesamte entfaltete Länge des Resonators kurz genug gehalten werden kann, wäre auch eine weitere totale interne Reflektion des Laserstrahls im aktiven Lasermaterial grundsätzlich denkbar und möglich.

Fig. 6 zeigt ein viertes,nicht unter die vorliegende Erfindung fallendes, Alternativbeispiel. Die Unterschiede zum ersten Ausführungsbeispiel werden im Folgenden erläutert. Im Übrigen kann die Beschreibung zum ersten Ausführungsbeispiel in analoger Weise herangezogen werden.

In diesem Alternativbeispiel ist der Resonator als stabiler Resonator ausgebildet.

Die Spiegel 4, 5, die wiederum die Endspiegel des Resonators bilden, können in diesem Alternativbeispiel plan ausgebildet sein, wobei im Betrieb von der thermischen Linse ein fokussierendes Element ausgebildet wird. Auch ein weiteres fokussierendes (= eine positive Brechkraft aufweisendes) Element kann im Resonator angeordnet sein. Es kann auch mindestens einer der beiden Spiegel 4, 5 fokussierend ausgebildet sein. Im Alternativbeispiel ist dies für den Spiegel 5 angedeutet.

Der einzige longitudinale Mode des Lasers könnte hier im Vergleich zum ersten Ausführungsbeispiel einen relativ kleinen Strahlradius aufweisen, z.B. wenige 10 µm beim planen Spiegel 4. Die Pulsraten können relativ hoch sein, insbesondere über 8 kHz. Die Pulsenergien können hier z.B. im Bereich 1 µJ bis 100 µJ liegen.

Die Brewster-Flächen des aktiven Lasermaterials 1 und des passiven Güteschalters 2 sind in diesem Alternativbeispiel nicht vorhanden. Da kein polarisierendes Element vorhanden ist, ist der aktive Güteschalter 8 hier in Form eines akusto-optischen Modulators ausgebildet. Dieser wird durch einen Piezo angetrieben (durch die horizontalen Linien angedeutet).

In einer Modifikation dieses Alternativbeispiels könnte ein polarisierendes Element im Resonator angeordnet sein, beispielsweise könnte dies durch eine "flat-brewster"-Konfiguration analog zum ersten Ausführungsbeispiel ausgebildet werden. In diesem Fall könnte der aktive Güteschalter 8 auch von einem elektro-optischen Modulator gebildet werden.

In diesem Alternativbeispiel ist der Spiegel 5 teildurchlässig ausgebildet, um den Laserstrahl auszukoppeln. Beispielsweise kann der Spiegel 5 eine Transmission von 30% bei 1064 nm aufweisen.

Der passive Güteschalter 2 und das aktive Lasermaterial 1 sind in Fig. 6 durch einen Spalt getrennt dargestellt. Vorzugsweise sind diese beiden Elemente zu einer Einheit verbunden, z.B. durch Diffusion-Bonding an der jeweils polierten Fläche zusammengebondet. Wenn keine "flat-brewster"-Konfiguration vorhanden ist, kann eine dielektrische Schicht zwischen den beiden Elementen entfallen.

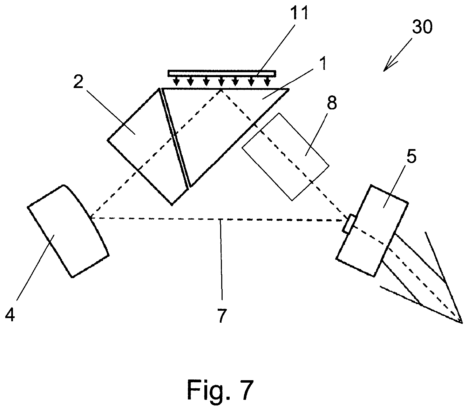

Fig. 7 zeigt ein fünftes ,nicht unter die vorliegende Erfindung fallendes, Alternativbeispiel. In diesem ist der Resonator 30 als Ringresonator ausgebildet. In Ringresonatoren laufen mögliche Moden im Resonator um. Es kann beispielsweise wie dargestellt eine im Wesentlichen "dreieckförmige" Struktur ausgebildet sein, wobei an zwei Ecken des Dreiecks eine Reflektion an den Spiegeln 4, 5 erfolgt und an der dritten Ecke des Dreiecks eine totale interne Reflektionen im aktiven Lasermaterial 1 erfolgt. Weitere Reflektionen an spiegelnden Flächen sind denkbar und möglich, z.B. zur Ausbildung einer im Wesentlichen "viereckförmigen" Ringstruktur. Durch einen der Spiegel 4, 5 kann die Auskopplung der Laserstrahlung erfolgen. Im Falle der Ausbildung als instabiler Resonator, wie dies in Fig. 7 dargestellt ist, ist dieser Spiegel 5 als Gradientenspiegel ausgebildet. Das Pumpen kann beispielsweise in analoger Weise wie im zweiten Ausführungsbeispiel beschrieben erfolgen, d.h. das aktive Lasermaterial 1 ist seitengepumpt.

Im Falle eines Ringresonators ist die Resonatorlänge die entlang der Achse des Laserstrahls im Resonator 30 gemessene Länge über einen Umlauf durch den Resonator 30. Damit in einer vorteilhaften Ausbildung zumindest im Wesentlichen nur ein einziger longitudinaler Mode im Resonator anschwingt, beträgt die Resonatorlänge vorzugsweise weniger als 100 mm. Vorteilhafterweise weist der Laser hierbei im Betrieb zumindest im Wesentlichen auch nur einen einzigen transversalen Mode auf. Bezüglich der Ausbildung und Auslegung des passiven und aktiven Güteschalters 2, 8 im Resonator gelten die in diesem Zusammenhang gemachten Ausführungen zu den Ausführungsbeispielen mit linearem Resonator. Der Verlust des aktiven bzw. passiven Güteschalters bezieht sich hier auf einen einzelnen Umlauf im Ringresonator (also auf nur einen einzigen Durchgang durch den jeweiligen Güteschalter).

Ein Ringlaser (=Laser mit Ringresonator) hat den Vorteil, dass das "spacial hole burning" zur Gänze entfallen kann, was die Modenstabilität gegenüber den Nebenmoden erhöht. In den Ringresonator könnte man optische Kristalle mit "second harmonic generation" einbauen und somit beispielsweise aus 1064 nm grüne 532 nm-Pulse erzeugen.

Unterschiedliche weitere Modifikationen sind denkbar und möglich, ohne den Bereich der Erfindung zu verlassen. So könnte beispielsweise auch bei den anderen Ausführungsbeispielen als dem in Fig. 6 gezeigten Alternativbeispiel ein akusto-optischer Modulator anstelle eines elektro-optischen Modulators als aktiver Güteschalter eingesetzt werden.

Die Reihenfolge der Elemente im Resonator kann unterschiedlich gewählt werden. Die Pumpstrahlung könnte in anderer Weise eingekoppelt werden, z.B. durch einen zusätzlichen dichroitischen Spiegel (bei longitudinalem Pumpen).

Zur Verbesserung der Performance und/oder um "parasitic lasing" zu vermeiden, können entsprechende Beschichtungen, wie Antireflektionsbeschichtungen vorgesehen werden, wie dies im Stand der Technik bekannt ist.

Zur Polarisationsselektion des Laserlichts könnten andere Winkel anstelle des Brewster-Winkels verwendet werden, z.B. 45° Winkel. Es können hierbei auch verschiedene Teile mit dazwischenliegender dielektrischer Schicht gebondet sein.

Die Polarisationsselektion könnte auch in anderer Weise als gezeigt durchgeführt werden, beispielsweise auch durch eine auf eine Beschichtung eines optischen Elements des Resonators aufgebrachte oder in diese eingebrachte Gitterstruktur. Polarisationsselektionen des Laserlichts sind in unterschiedlicher Weise bekannt.

Es könnte ein anderes aktives Lasermaterial 1 als Nd:YAG vorgesehen sein, z.B. Yb:YAG oder Er:YAG.

Für den passiven Güteschalter 2 können andere sättigbare Absorbermaterialien verwendet werden, z.B. Co:MALO (für Wellenlängen > 1,2 µm), gegebenenfalls in Verbindung mit Nd:YAG, welches bei der Nebenlinie von 1440 nm betrieben wird.

Für einen Elektro-optischen Modulator könnte ein anderes Materials als BBO eingesetzt werden, z.B. RTP, KTP, KD*P usw.

### Legende

zu den Hinweisziffern:
- 1: aktives Lasermaterial
- 2: passiver Güteschalter
- 3: Resonator
- 4: Spiegel
- 5: Spiegel
- 6: Pumpstrahlung
- 7: Achse
- 8: aktiver Güteschalter
- 9: Seitenfläche
- 10: Seitenfläche
- 11: Stack

## Patentansprüche

1. Gütegeschalteter Festkörperlaser mit einem aktiven Lasermaterial in Form von Nd:YAG, Yb:YAG oder Er:YAG und mit einem linearen, ungefalteten oder gefalteten, Resonator (3, 30), der eine entlang der Achse des Laserstrahls im Resonator gemessene Resonatorlänge (a) von weniger als 50 mm besitzt, wobei im Resonator (3) nur ein einziger longitudinaler Mode anschwingt oder ein longitudinaler Grundmode und weitere Moden anschwingen, deren Energie weniger als 10% der Energie des Grundmodes beträgt, und der sowohl einen passiven Güteschalter (2) als auch einen aktiven Güteschalter (8) aufweist, wobei der vom aktiven Güteschalter (8) im aktivierten Zustand bewirkte Verlust, bezogen auf einen Hin- und einen Rückweg durch den Resonator (3), weniger als 50% beträgt, **dadurch gekennzeichnet, dass** der Resonator (3, 30) als instabiler Resonator ausgebildet ist, wobei einer der Spiegel (4, 5) ein Gradientenspiegel ist, und dass der vom passiven Güteschalter (2) maximal bewirkte Verlust, bezogen auf einen Hin- und einen Rückweg durch den Resonator (3), mehr als 50% beträgt, wobei die Pulsdauer eines Pulses des Festkörperlasers weniger als 500 ps beträgt und die Pulsenergie eines Pulses mehr als 1mJ beträgt.

2. Festkörperlaser nach Anspruch 1, **dadurch gekennzeichnet, dass** der aktive Güteschalter (8) ein elektro-optischer Modulator, vorzugsweise eine Pockels-Zelle, oder ein akusto-optischer Modulator ist.

3. Festkörperlaser nach Anspruch 1 oder 2, **dadurch gekennzeichnet, dass** der vom aktiven Güteschalter (8) im aktivierten Zustand bewirkte Verlust, bezogen auf einen Hin- und einen Rückweg durch den Resonator (3), weniger als 30% beträgt.

4. Festkörperlaser nach einem der Ansprüche 1 bis 3, **dadurch gekennzeichnet, dass** der vom passiven Güteschalter (2) maximal bewirkte Verlust, bezogen auf einen Hin- und einen Rückweg durch den Resonator (3), mehr als 70% beträgt.

5. Gütegeschalteter Festkörperlaser nach einem der Ansprüche 1 bis 4, **dadurch gekennzeichnet, dass** der Resonator (3, 30) eine Resonatorlänge (a) von weniger als 25 mm aufweist.

6. Festkörperlaser nach einem der Ansprüche 1 bis 5, **dadurch gekennzeichnet, dass** das aktive Lasermaterial (1) seitengepumpt ist.

7. Festkörperlaser nach einem der Ansprüche 1 bis 5, **dadurch gekennzeichnet, dass** das aktive Lasermaterial (1) longitudinal gepumpt ist.

## Claims

1. Q-switched solid-state laser comprising an active lasing medium in the form of Nd:YAG, Yb:YAB or Er:YAG and a linear resonator (3, 30) that is non-convoluted or convoluted and has a resonator length (a) of less than 50 mm measured along the axis of the laser beam in the resonator, with either just one longitudinal mode oscillating in the resonator (3) or one longitudinal fundamental mode and further modes oscillating in the resonator, the energy of said further modes being less than 10% of the energy of the fundamental mode, and said resonator also having both a passive Q-switch (2) and an active Q-switch (8), the loss induced by the active Q-switch (8) when in the activated state being less than 50% in relation to a round trip by the resonator (3), **characterised in that** the resonator (3, 30) is formed as an unstable resonator, one of the mirrors (4, 5) being a gradient mirror, and **in that** the maximum loss induced by the passive Q-switch (2) is more than 50% in relation to a round trip by the resonator (3), the pulse duration of one pulse of the solid-state laser being less than 500 ps, and the pulse energy of one pulse being more than 1 mJ.

2. Solid-state laser according to claim 1, **characterised in that** the active Q-switch (8) is an electro-optic modulator, preferably a Pockels cell, or an acousto-optic modulator.

3. Solid-state laser according to claim 1 or claim 2, **characterised in that** the loss induced by the active Q-switch (8) when in the activated state is less than 30% in relation to a round trip by the resonator (3).

4. Solid-state laser according to any of claims 1 to 3, **characterised in that** the maximum loss induced by the passive Q-switch (2) is more than 70% in relation to a round trip by the resonator (3).

5. Q-switched solid-state laser according to any of claims 1 to 4, **characterised in that** the resonator (3, 30) has a resonator length (a) of less than 25 mm.

6. Solid-state laser according to any of claims 1 to 5, **characterised in that** the active lasing medium (1) is side-pumped.

7. Solid-state laser according to any of claims 1 to 5, **characterised in that** the active lasing medium (1) is longitudinally pumped.

## Revendications

1. Laser à l'état solide à commutation Q comprenant un matériau laser actif sous forme de Nd:YAG, Yb:YAG ou Er:YAG et avec un résonateur linéaire, non plié ou plié (3, 30), qui possède une longueur de résonateur (a) de moins de 50 mm mesurée le long de l'axe du faisceau laser dans le résonateur, un seul mode longitudinal oscillant dans le résonateur (3), ou un mode de base longitudinal et d'autres modes oscillant dans le résonateur (3), dont l'énergie est inférieure à 10 % de l'énergie du mode de base, et qui est muni aussi bien d'un commutateu Q passif (2) que d'un commutateur Q actif (8), la perte provoquée par le commutateur Q actif (8) à l'état activé, par rapport à un trajet aller et un trajet retour à travers le résonateur (3), est inférieure à 50 %, **caractérisée en ce que** le résonateur (3, 30) est conçu comme un résonateur instable, l'un des miroirs (4, 5) étant un miroir à gradient, et **en ce que** la perte maximale provoquée par le commutateur Q passif (2), rapportée à un trajet aller et à un trajet retour à travers le résonateur (3), est supérieure à 50 %, la durée d'une impulsion du laser à l'état solide étant inférieure à 500 ps et l'énergie d'une impulsion étant supérieure à 1 mJ.

2. Laser à solide selon la revendication 1, **caractérisé en ce que** le commutateur Q actif (8) est un modulateur électro-optique, de préférence une cellule de Pockels, ou un modulateur acousto-optique.

3. Laser à l'état solide selon la revendication 1 ou 2, **caractérisé en ce que** la perte provoquée par le commutateur Q actif (8) à l'état activé, par rapport à un trajet aller et un trajet retour à travers le résonateur (3), est inférieure à 30 %.

4. Laser à solide selon l'une des revendications 1 à 3, **caractérisé en ce que** la perte maximale provoquée par le commutateur Q passif (2), par rapport à un trajet aller et un trajet de retour à travers le résonateur (3), est supérieure à 70 %.

5. Laser à l'état solide à commutation Q selon l'une des revendications 1 à 4, **caractérisé en ce que** le résonateur (3, 30) préente une longueur de résonateur (a) inférieure à 25 mm.

6. Laser à l'état solide selon l'une des revendications 1 à 5, **caractérisé en ce que** le matériau laser actif (1) est pompé latéralement.

7. Laser à l'état solide selon l'une des revendications 1 à 5, **caractérisé en ce que** le matériau laser actif (1) est pompé longitudinalement.
